# EUROPÄISCHE PATENTSCHRIFT

(11) **EP 3 302 928 B1**
(45) Veröffentlichungstag und Bekanntmachung des Hinweises auf die Patenterteilung: **25.08.2021**
(21) Anmeldenummer: 16728008.0
(22) Anmeldetag: 08.06.2016
(51) Int. Cl.: B29C 48/90, B29C 48/10, B29C 55/28, B29C 48/92

(54) **VORRICHTUNG UND VERFAHREN ZUM KÜHLEN EINES FOLIENSCHLAUCHS**
DEVICE AND METHOD FOR COOLING A BLOWN FILM
DISPOSITIF ET PROCÉDÉ POUR REFROIDIR UN FILM TUBULAIRE

(30) Priorität: 08.06.2015 DE 102015210468
(43) Veröffentlichungstag der Anmeldung: 11.04.2018
(73) Patentinhaber: Windmöller & Hölscher KG, 49525 Lengerich (DE)
(72) Erfinder: GOLDENSTEIN, Jens, 49525 Lengerich (DE); STEUTER, Henning, 49525 Lengerich (DE)
(86) Internationale Anmeldenummer: PCT/EP2016/063074
(87) Internationale Veröffentlichungsnummer: WO 2016/198477

(56) Entgegenhaltungen:
- WO-A1-2012/159233
- DE-A1- 1 937 978
- DE-A1- 10 160 321
- DE-A1- 19 608 522
- JP-B1- S 495 739
- US-A- 3 821 343

## Beschreibung

Die Erfindung betrifft eine Vorrichtung zum Kühlen eines Folienschlauches nach dem Oberbegriff des Anspruchs 1 sowie ein Verfahren nach dem Oberbegriff des Anspruchs 15.

Ein Folienschlauch, wie er mit einer Blasfolienanlage erzeugt wird, wird in der Regel anschließend abgekühlt und auch kalibriert, so dass er einen einheitlichen Durchmesser aufweist. Um bestimmte Eigenschaften hervorzurufen, kann der Folienschlauch mit einer Flüssigkeit besonders schnell abgekühlt werden. Hier wird der Folienschlauch in Regel in der Richtung der Schwerkraft extrudiert. Der Folienschlauch besteht dabei häufig aus Kunststoff.

Eine hierauf ausgerichtete Vorrichtung zum Kühlen umfasst eine Vorrichtung zum Aufbringen von Flüssigkeit auf die Außenwandung des Folienschlauchs. Die Kühlung mit Flüssigkeit entzieht dem Folienschlauch einen Teil der Wärme schneller als es mit einem Gas möglich wäre. Die auf den Folienschlauch aufgetragene Flüssigkeit wird in der Regel möglichst vollständig wieder entfernt, bevor der Folienschlauch weiterverarbeitet, insbesondere in einer Wickeivorrichtung aufgewickelt wird. Dazu ist oft eine Einrichtung zum Absaugen der Flüssigkeit vorgesehen.

Die WO 2011/058072 A1 offenbart eine solche Vorrichtung und ein Verfahren zum Kühlen eines Folienschlauches, wobei eine Absaugeinrichtung zum Absaugen der Kühlflüssigkeit umfasst ist, die eine Innenoberfläche, welche ein flüssigkeitsdurchlässiges Element umfasst. Damit wird einerseits das Wasser abgesaugt und andererseits auch der Schlauch festgehalten, da dieser bei bestimmten Materialien aufgrund der Schwerkraft reißen könnte. Am unteren Rand der Absaugeinrichtung ist eine weitere Einrichtung vorgesehen, mit welcher auch die verbleibende Flüssigkeit entfernt werden kann. Diese Einrichtung arbeitet nach dem Prinzip einer Sperrluftdichtung, wobei der Folienschlauch mit einem unter Überdruck stehenden Gas beaufschlagt wird, so dass die verbliebene Flüssigkeit zurück in Richtung der Absaugeinrichtung gedrängt wird.

Eine hierauf ausgerichtete Kalibriereinrichtung umfasst in der Regel einen rohrförmigen Bereich mit wenigstens einer Innenwandung, durch welchen der Folienschlauch führbar ist. Dabei ist der Folienschlauch in der Regel rotationssymmetrisch, wobei meist die Transportrichtung und die Symmetrieachse parallel zueinander liegen. Die Symmetrieachse ist dabei im Wesentlichen deckungsgleich mit der Hauptträgheitsachse des Folienschlauches innerhalb der Kalibriereinrichtung. Die Hauptträgheitsachse wird im Folgenden auch kurz als Hauptachse bezeichnet.

Weiterhin umfasst die Kalibriereinrichtung ein Flüssigkeitsreservoir, welches eine Flüssigkeit bereitstellt und welches oberhalb des rohrförmigen Bereichs vorgesehen ist. Diese Flüssigkeit ist vorzugsweise Wasser, weshalb im Folgenden auch oft von Wasser als Synonym für die Flüssigkeit die Rede ist.

Die Flüssigkeit gelangt in einem Einlaufbereich in dem Raum zwischen der Außenwandung des Folienschlauchs und der Innenwandung des rohrförmigen Bereichs. Dabei wird einerseits der Folienschlauch aufgrund der oft hohen Wärmekapazität der Flüssigkeit schnell abgekühlt und andererseits wird vermieden, dass der Folienschlauch mit der Innenwandung des rohrförmigen Bereichs in Kontakt tritt. Unterhalb des rohrförmigen Bereichs ist schließlich eine Abstreifeinrichtung angeordnet, mit welcher wenigstens ein Teil der Flüssigkeit von der Außenoberfläche abnehmbar ist, so dass die Weiterverarbeitung des Folienschlauches nicht durch die Flüssigkeit negativ beeinflusst wird. Das Abnehmen der Flüssigkeit kann dabei mit dem Abstreifen oder Abziehen einer Flüssigkeit von einer glatten Oberfläche wie etwa beim Scheibenwischer eines Kraftfahrzeugs oder bei einem Abzieher zum Fensterreinigen verglichen werden.

Es kann jedoch vorkommen, dass trotz einer Kalibrierung sich die Dimensionen des Folienschlauches beim Austritt aus der Kalibriereinrichtung verändern, so dass die Abstreifeinrichtung ihre Wirkung nicht mehr vollständig erfüllen kann. Insbesondere ist es oft sogar gewünscht, den Durchmesser des Folienschlauches verändern zu können.

Die Druckschriften JP 1974 05739 und DE 1 937 978 offenbaren Netze, die dem Kalibrieren eines Folienschlauches dienen und die in ihrem Durchmesser an den Durchmesser des Folienschlauches anpassbar sind. Eine Abstreifwirkung der Flüssigkeit kann damit jedoch nicht erzielt werden.

Die US 3 821 343 offenbart eine Vorrichtung zum Kühlen und zum Flachlegen eines Folienschlauches mit einem Wasserbad. Es sind Elemente offenbart, die innerhalb des Wasserbades angeordnet sind und die auch Flüssigkeit vom Außenumfang des Folienschlauches absaugen. Eine Abstreifeinrichtung zum Abstreifen von verbliebener Flüssigkeit ist nicht offenbart.

Die JP 1990 128827A offenbart eine Vorrichtung nach dem Oberbegriff des Anspruchs 1 und ein entsprechendes Verfahren nach dem Oberbegriff des Anspruchs 15 zum Kühlen eines Folienschlauches, wobei die Flüssigkeit zwischen einem rohrförmigen Bereich und dem Folienschlauch einleitbar ist, wobei der Folienschlauch in eine Transportrichtung transportierbar ist. In der Vorrichtung ist auch eine Abstreifvorrichtung vorgesehen. Da diese Abstreifvorrichtung zwar drehbar, aber fest ist, kann auf eine Dimensionsänderung des Folienschlauches nicht reagiert werden.

Es ist daher die Aufgabe der vorliegenden Erfindung, eine Vorrichtung und ein Verfahren zum Kühlen eines Folienschlauches derart weiterzubilden, dass auch bei unterschiedlichen Betriebssituationen die Flüssigkeit möglichst zuverlässig von der Außenoberfläche des Folienschlauches abgesaugt wird. Erfindungsgemäß wird diese Aufgabe durch sämtliche Merkmale des Anspruchs 1 gelöst. In den abhängigen Ansprüchen sind mögliche Ausgestaltungen der Erfindung angegeben.

Gemäß der vorliegenden Erfindung ist vorgesehen, dass das Ableitelement in Transportrichtung gesehen hinter dem rohrförmigen Bereich angeordnet ist und dass der Abstand, den das Ableitelement zur Hauptachse des Folienschlauchs einnimmt, veränderbar ist, wobei das Ableitelement eine umlaufende, ununterbrochene Kante umfasst, welche der Außenoberfläche des Folienschlauches zugewandt ist. Sollte sich also eine Formatänderung des Folienschlauches ergeben, so kann das Ableitelement hierauf derart eingestellt werden, dass anschließend weiterhin die Flüssigkeit möglichst vollständig von der Außenoberfläche des Folienschlauches abgenommen wird bzw. keine Beschädigungen des Folienschlauches in Kauf genommen werden muss. Eine Formatänderung des Folienschlauches kann dabei beabsichtigt sein. Das Ableitelement der vorliegenden Erfindung ist dazu eingerichtet, die auch bei einer Absaugeinrichtung oft noch vorhandene Restflüssigkeit zuverlässig abzunehmen.

Besonders bevorzugt ist Wasser als Flüssigkeit, da dieses leicht handzuhaben ist.

In einer vorteilhaften Ausgestaltung der Erfindung ist der Verstellbereich, also der Bereich, in dem der Abstand des Ableitelements zur Hauptachse der Folien einstellbar ist, vorzugsweise mindestens +/- 10mm und/oder bis zu +/- 500mm.

Vorteilhaft ist es dabei, wenn die Vorrichtung zum Aufbringen von Flüssigkeit wenigstens ein Folienführungselement mit wenigstens einer Innenwandung umfasst, welches zumindest teilweise um den Folienschlauch herum angeordnet ist und entlang welchem der Folienschlauch führbar ist. Mit anderen Worten wird die Blasfolie, während sie mit der Flüssigkeit beaufschlagt ist, mit einem Folienführungselement geführt. Insbesondere ist es dadurch möglich, die Flüssigkeit zu kanalisieren und eng am Folienschlauch zu halten, so dass zur Kühlung nur ein Flüssigkeitsfilm notwendig ist. Ein Flüssigkeitsverlust durch ggf. entstehende Wasserspritzer wird dadurch vermieden. Gleichzeitig wird durch die Flüssigkeit vermieden, dass der Folienschlauch das Folienführungselement berührt, so dass Beschädigungen des Folienschlauchs in einem geringeren Maße auftreten.

Ein einzelnes oder eine Mehrzahl solcher Folienführungselemente, die den Folienschlauch umgeben, können dabei auch der Kalibrierung des Folienschlauches dienen.

Das eine Folienführungselement oder die Mehrzahl der Folienführungselemente umschreiben oft einen rohrförmigen Bereich mit wenigstens einer nach innen gerichteten, d.h. in Richtung des Folienschlauches gerichteten Wandung, durch welchen der Folienschlauch führbar ist. Der Folienschlauch ist dabei in der Regel rotationssymmetrisch, wobei die Transportrichtung und die Symmetrieachse parallel zueinander liegen. Die Symmetrieachse ist dabei im Wesentlichen deckungsgleich mit der Hauptträgheitsachse des Folienschlauches innerhalb der Kalibriereinrichtung. Die Hauptträgheitsachse wird im Folgenden auch kurz als Hauptachse bezeichnet.

So ist in der WO 2012/032128 A1 eine Kalibriereinrichtung offenbart, der an eine Formatänderung des Folienschlauches in weiten Bereichen anpassbar ist. Die vorliegende Erfindung ist daher besonders vorteilhaft mit einer Kalibriereinrichtung gemäß der WO 2012/032128 A1 kombinierbar. Die dortige Offenbarung einer formatvariablen Kalibriereinrichtung gilt hiermit in dieser Patentanmeldung mit aufgenommen. Der Abstand, den das flüssigkeitsdurchlässige Element zur Hauptachse des Folienschlauches einnimmt, ist zwischen einem Minimalabstand und einem Maximalabstand einstellbar, wobei bevorzugt der Maximalabstand mindestens das 1,2-Fache des Minimalabstands ist.

In einer erfindungsgemäßen Vorrichtung, insbesondere in einer erfindungsgemäßen Blasfolienanlage, ist vorgesehen, dass der Folienschlauch von innen mit einem Druck beaufschlagbar ist, so dass sich der Folienschlauch im Vergleich zu seinem Durchmesser, den er bei der Extrusion aus einer Ringdüse hat, in radialer Richtung ausdehnt. Durch diesen Druck, welcher insbesondere ein Überdruck ist, wird der Folienschlauch gegen das Folienführungselement gedrückt, welches dann eine Gegenkraft bereitstellt. Die radiale Ausdehnung wird in der Regel als Aufblasverhältnis bezeichnet, dass im Zusammenhang mit einer erfindungsgemäßen Vorrichtung zum Kühlen 1,1 bis 3 beträgt. Das bedeutet, dass der Durchmesser des Folienschlauches gegenüber dem Durchmesser der Ringdüse um 10% bis 200% angewachsen ist.

Bevorzugt ist dabei, wenn oberhalb oder im oberen Bereich des Folienführungselements ein Flüssigkeitsreservoir vorgesehen ist, mit welchem die Flüssigkeit bereitstellbar ist, wobei insbesondere die Flüssigkeit zwischen das Folienführungselement und den Folienschlauch (6) leitbar ist. Dabei kann insbesondere der Einlaufbereich des Folienführungselements für den Folienschlauch das Flüssigkeitsreservoir ausbilden, so dass keine eigenständige Vorrichtung notwendig ist. Dieses spart Kosten. Zudem wird dadurch eine kompakte Einheit geschaffen, die mit einer möglichst geringen Bauhöhe auskommt.

In weiterer Ausgestaltung der Erfindung ist vorgesehen, dass in Transportrichtung des Folienschlauches gesehen zwischen dem zumindest einen Folienführungselement und dem Ableitelement eine Absaugeinrichtung angeordnet ist, mit welcher die Flüssigkeit zumindest teilweise von der Außenwandung des Folienschlauches entfernbar ist. Mit anderen Worten nimmt die Absaugeinrichtung einen Großteil der Flüssigkeit ab, während das Ableitelement den verbliebenen Rest der Flüssigkeit möglichst vollständig abnimmt. Vorzugsweise bildet das Ableitelement zusätzlich eine Dichtung der Absaugeinrichtung, so dass die Absaugeinrichtung keine oder nur möglichst wenig Umgebungsluft ansaugt.

Vorteilhaft ist es, insbesondere im Zusammenhang mit der erwähnten Absaugeinrichtung, wenn die Flüssigkeit an der Oberseite des Ableitelements abgeleitet wird. Der Flüssigkeitsabfluss der Absaugeinrichtung kann gleichzeitig zum Abfluss der durch das Ableitelement gesammelten Flüssigkeit genutzt werden.

Das zumindest eine Ableitelement selbst kann ein Luftbläser, ein Schlitzbläser oder auch eine Sperrluftdichtung sein.

Ist das Folienführungselement und/oder die Absaugeinrichtung an den Durchmesser des Folienschlauches anpassbar, ist es vorteilhaft, wenn das Ableitelement in seinem Abstand zur Hauptachse des Folienschlauches synchron mit einer oder beiden dieser Einrichtungen verstellbar ist. Dazu kann eine mechanische und/oder elektronische Kopplung der Bewegungen vorgesehen sein.

Jedoch ist es auch vorteilhaft, wenn der Abstand des Ableitelements auch unabhängig von Folienführungselement und/oder Absaugeinrichtung einstellbar ist, um beispielsweise ein Anpassung vornehmen zu können, die beispielsweise den Verschleiß kompensiert, eine Relaxation des Materials des Ableitelements kompensiert oder auch eine Anpassung an das Material des Folienschlauches bietet.

Es bietet sich insbesondere zu diesem Zweck an, eine Messvorrichtung zur Messung der Position des Ableitelements, insbesondere seiner Innenkante vorzusehen.

Erfindungsgemäß umfasst das zumindest eine Ableitelement eine umlaufende, ununterbrochene Kante, wobei die Kante der Außenoberfläche des Folienschlauches zugewandt ist und vorzugsweise an dieser anliegt. Mit einer umlaufenden Kante kann die Flüssigkeit über den gesamten Umfang zuverlässig abgenommen werden, ohne das Spalte oder Lücken entstehen, in denen dies nicht der Fall ist. Allgemein ist eine linienförmige Berührung zwischen Ableitelement und Folienschlauch bevorzugt. Auf diese Weise kann zuverlässig die verbleibende Flüssigkeit abgeleitet oder gar abgeschabt werden, ohne dass der Folienschlauch Beschädigungen erleidet. Anstelle einer Berührung kann auch ein geringer Abstand von kleiner als 10 mm, vorzugsweise kleiner als 1mm, insbesondere kleiner als 0,5 mm, zwischen der umlaufenden Kante und dem Folienschlauch vorgesehen sein. In diesem Fall kann ein kleiner Teil der Restflüssigkeit einen Gleitfilm zwischen Kante und Folienschlauch bilden, wogegen ein Teil der Restflüssigkeit, der Tropfen ausgebildet hat, entfernt wird. Beschädigungen des Folienschlauches werden dadurch nahezu gänzlich vermieden. Bevorzugt ist der Abstand so gewählt, dass der verbleibende Flüssigkeitsfilm während einer kurzen Weitertransportstrecke des Folienschlauches verdunstet. Im Bedarfsfall kann eine Verdunstungseinrichtung, beispielsweise Wärmestrahler zur Unterstützung der Verdunstung vorgesehen sein.

Insbesondere bei unempfindlichen Folienschläuchen kann vorgesehen sein, dass der Durchmesser des Kreises, den die Kante umschreibt, kleiner ist als der nominelle Durchmesser der Folienblase. Mit anderen Worten ist das Ableitelement in den Folienschlauch eingedrückt, um die restliche Flüssigkeit zuverlässig und vollständig abnehmen zu können.

Um allgemein die Reibung zwischen dem Ableitelement und dem Folienschlauch zu verringern kann vorgesehen sein, dass das Ableitelement mit einem der folgenden Material beschichtet ist, eines der folgenden Materialien umfasst oder eines der folgenden Materialien permanent oder intervallartig zugeführt wird:
- Graphit
- Silikon
- Teflon
- Gummi
- Schmierfilm

Besonders vorteilhaft ist das Vorsehen eines ringförmigen, flachen Streifens aus einem elastischen Material. Bevorzugt ist dieser Streifen in einer Ebene angeordnet, die orthogonal zur Hauptachse des Folienschlauches verläuft. Damit übernimmt der Innenrand dieses Streifens die Abstreiffunktion. Zu diesem Zweck ist die Verwendung eines elastischen Materials vorteilhaft. Der Innenrand und der Außenrand dieses flachen Streifens sind im entspannten Zustand bevorzugt kreisförmig und konzentrisch, wobei der Außendurchmesser vorteilhafterweise zumindest das 1,5-Fache des Innendurchmessers ist. Allgemein kann die Breite des Streifens größer als 10mm, vorzugsweise größer als 70mm sein, um einen möglichst kreisförmigen Innenrand zu erhalten. Dieser Streifen kann dabei einteilig und auch im Übrigen homogen sein. Ein solcher Streifen lässt sich durch Aufbringen von Kräften, welche eine Radialkomponente relativ zu der Abstreifeinrichtung aufweisen, auf einfache Weise so beeinflussen, dass der genannte Abstand zwischen Hauptachse und dem Abstreifelement veränderbar ist, was später noch anhand verschiedener Ausführungsbeispiele näher beschrieben wird. Es ist vorgesehen, dass der Innenrand im Wesentlichen stets eine Kreisform aufweist. Insbesondere kann vorgesehen sein, dass an diskreten Punkten des Außenrandes radial nach außen gerichtete Kräfte angreifen, wobei aufgrund der Elastizität des Ableitelements sich diese Kräfte vergleichmäßigen und einen kreisförmigen Innenrand sicherstellen. Die Anzahl der genannten diskreten Punkte steht in Abhängigkeit von der Breite, dem Verstellbereich und/oder den Materialeigenschaften des Ableitelements, so dass eine konkrete Zahl nicht angebbar ist.

Vorteilhaft ist es, wenn der Verstellbereich, also die mögliche Änderung des Innendurchmessers größer als 20mm, insbesondere größer als 100mm, vorzugsweise größer als 500mm ist. Besonders bevorzugt ist ein Verstellbereich von mehr als 1000mm. Damit lassen sich die Eigenschaften, insbesondere die Wandstärke des Folienschlauches in einem weiten Bereich variieren und den Bedürfnissen anpassen.

In einer Ausführungsform der Erfindung ist vorgesehen, dass das Ableitelementen aus mehreren Werkstoffen besteht. Diese können beispielsweise schichtartig aufgebaut sein. Insbesondere kann eine Schicht die Innenkante einer anderen Schicht überragen und beispielsweise um letztere umgeschlagen werden. In diesem Fall kann eine Schicht eine geringe Elastizität aufweisen, um die Verstellwege bei der Abstandsanpassung minimal zu halten, während die andere Schicht weich sein kann, um die Reibung zwischen Ableitelement und Folienschlauch zu verringern, so dass Beschädigungen des Folienschlauchs gering gehalten werden. Alternativ können auch mehrere übereinander angeordnete, aber voneinander unabhängige Ableitelemente vorgesehen sein.

In einer vorteilhaften Ausführungsform der Erfindung kann das Ableitelement segmentiert sein, d.h. auch in Umfangsrichtung aus mehreren Einzelelementen bestehen. Als Beispiel ist eine Irisblendenanordnung zu nennen.

Besonders vorteilhaft ist das Vorsehen von Gummi als Material für ein streifenartiges Ableitelement, welches die geforderten Eigenschaften aufweist und dabei noch dauerhaft haltbar ist.

Um das Ableitelement nun im Abstand verändern zu können ist, ist eine Krafteinleiteinrichtung vorgesehen, mit welcher an mehreren Punkten, insbesondere an mehr als 20 Punkten, des Ableitelements einleitbar ist. Insbesondere im Zusammenhang mit der Ausführungsform, in der ein ringförmiger, flacher Streifen vorgesehen ist, können hiermit die Stellkräfte an dessen Innenumfang vergleichmäßigt werden, so dass auch bei einer punktuellen Krafteinleitung im Bereich des Außenrandes der Abstreifers der Innendurchmesser homogen veränderbar ist, d. h. dass die Kreisform beibehalten wird.

Es ist besonders vorteilhaft, wenn die Krafteinleiteinrichtung eine Mehrzahl von zumindest teilweise radial nach außen bewegbaren oder sich erstreckenden Stellelementen umfasst, welche zugbelastbar sind, insbesondere Drähte oder Bänder. Es können jedoch auch Stangen, Stäbe oder ähnliches vorgesehen sein. Wichtig ist hierbei insbesondere eine nicht vorhandene oder nur geringfügige Längenänderung der Stellelemente, wenn sie eine auf sie wirkende Kraft in die Abstreifeinrichtung einleiten. Auf diese Weise wird eine einfache mechanische Lösung geschaffen, um Zugkräfte zu übertragen. Das Einleiten von Schubkräften ist insbesondere im Zusammenhang mit der Ausführungsform eines elastischen Ringes nicht erforderlich, da dieser in der Regel Rückstellkräfte aufgrund der Auslenkung aus der Ruhelage zur Verfügung stellt. Durch eine nicht vorhandene oder zu geringfügige Längenänderung ist die Einstellung des Abstandes des Ableitelements zur Hauptachse des Folienschlauches auf einfache Weise steuerbar.

Bevorzugt ist, dass die Stellelemente flexibel, aber in ihrer Länge im Wesentlichen kontant sind, wie es etwas in der Regel bei Drähten oder Bändern der Fall ist. Auf diese Weise kann die gesamte Vorrichtung zum Kühlen kompakt gebaut werden, denn bei einem "ziehen" der Stellelemente können Abschnitte dieser Stellelemente umgelenkt werden, so dass diese Abschnitte in eine andere Richtung als die Radialrichtung transportiert werden können.

In einer besonders bevorzugten Ausführungsform der Erfindung ist vorgesehen, dass die Vorrichtung zum Kühlen wenigstens einen Antrieb umfasst, welcher eine Stellkraft zur Änderung des Abstandes das Ableitelement zur Hauptachse des Folienschlauches zur Verfügung stellt. Der Antrieb ist dabei bevorzugt als Elektroantriebsmaschine ausgestaltet und kann damit eine genaue Stellkraft zur Verfügung stellen, wobei der Antrieb positionssteuerbar oder -regelbar ausgestaltet sein kann.

In einer weiteren, bevorzugten Ausgestaltung der erfindungsgemäßen Vorrichtung zum Kühlen ist ein Antriebskraftübertragungsmechanismus vorgesehen, mit welchem eine Antriebskraft in eine Stellkraft zu Einstellung das Ableitelement umwandelbar ist. Insbesondere geht es dabei darum, eine rotatorisch bereitgestellte Kraft in eine linear wirkende Kraft umzulenken. Grundsätzlich sind hier verschiedene Elemente denkbar, wobei bevorzugt wenigstens ein Zugelement wie ein Zahnriemen, eine Laschenkette, eine Zahnstange oder ein anderes, mit einer Antriebszahnteilung versehenes Bauteil einsetzbar ist, welche von einem an dem Antrieb angeordneten und rotatorisch angetriebenen Zahnrad bewegbar sind.

Eine besonders bevorzugte Ausgestaltung der Erfindung beinhaltet einen Antriebskraftübertragungsmechanismus, der die von einem Antrieb zur Verfügung gestellte Kraft insbesondere direkt oder über Wickelrollen auf die Stellelemente überträgt. Mit "direkt" ist gemeint, dass ein einziges Bauteil als Antriebskraftübertragungsmechanismus vorgesehen ist, an welchem die Stellelemente kraftschlüssig angeordnet sind, so dass bei einer Bewegung dieses Bauteils die Stellelemente bewegbar sind. In einer vorteilhaften Ausführungsform sind von dem Antriebskraftübertragungsmechanismus Wickelrollen antreibbar, welche in der Lage sind, die flexiblen Stellelement wie etwa Drähte, Bänder oder Fäden aufzuwickeln, so dass die Antriebskraft durch die über diese Wickelrollen wirkende Zugkraft auf die Stellelemente und damit auf die Abstreifeinrichtung übertragbar sind.

Vorteilhaft ist es auch, wenn der Antriebskraftübertragungsmechanismus wenigstens ein endlos umlaufendes Kraftübertragungselement, insbesondere eine Kette oder einen Zahnring, umfasst. Insbesondere ist mit einer Kette oder einem Zahnring mit einem einzigen Antrieb eine Anzahl an Zahnrädern antreibbar, wobei mit jedem der Zahnräder eine Wickelrolle antreibbar ist. Diese Zahnräder können dabei über den Umfang des Folienschlauches und mit Abstand zu diesem in oder an der Vorrichtung zum Kühlen verteilt sein, so dass an verschiedenen Stellen des Ableitelements in diese radial wirkende Stellkräfte einbringbar sind.

Die genannte Aufgabe wird auch gelöst durch die Merkmale des Anspruchs 15. Demnach ist vorgesehen, dass bei einer Durchmesseränderung des Folienschlauchs der Abstand, den das Ableitelement zur Hauptachse des Folienschlauchs einnimmt, verändert wird. Dabei werden die gleichen Vorteile erzielt, wie sie bereits im Zusammenhang mit der erfindungsgemäßen Vorrichtung beschrieben wurden.

Die Aufgabe wird zudem gelöst durch eine Blasfolienanlage, die eine Vorrichtung nach der obigen Beschreibung und/oder eine Vorrichtung nach den Ansprüche 1 bis 15 umfasst.

Eine erfindungsgemäße Blasfolienanlage umfasst eine Flachlegeeinrichtung, die sich in Transportrichtung des Folienschlauches der Vorrichtung zum Kühlen des Folienschlauches anschließt.

In einer erfindungsgemäßen Blasfolienanlage ist ein Folienschlauch herstellbar, dessen Wanddicke unter 5mm, insbesondere unter 1mm und bevorzugt unter 0,5mm liegt.

In einer erfindungsgemäßen Blasfolienanlage ist der Abstand zwischen dem Extrusionswerkzeug und der Vorrichtung zum Kühlen des Folienschlauches einstellbar. Dazu ist die Vorrichtung zum Kühlen des Folienschlauches an einer Höheneinstelleinrichtung angeordnet.

In einer erfindungsgemäßen Blasfolienanlage ist bevorzugt der Verstreckfaktor, also die Längenänderung sowohl in Umfangsrichtung als auch in Transportrichtung mindestens 2 und/oder höchstens 100, bevorzugt im Bereich von 5 bis 15. Ein solcher Verstreckfaktor führt gleichzeitig zu einer entsprechend geringeren Wanddicke des Folienschlauches.

Es sei nochmals explizit erwähnt, dass die Aufgabe auch gelöst wird durch eine Kalibriereinrichtung, die eine Vorrichtung nach der obigen Beschreibung und/oder eine Vorrichtung nach den Ansprüchen 1 bis 15 umfasst.

Weitere Vorteile, Merkmale und Einzelheiten der Erfindung gehen aus der nachfolgenden Beschreibung hervor, in der unter Bezugnahme auf die Figuren verschiedene Ausführungsbeispiele im Einzelnen erläutert sind. Dabei können die in den Ansprüchen und in der Beschreibung erwähnten Merkmale jeweils einzeln für sich oder beliebige Kombinationen erwähnter Merkmale erfindungswesentlich sein. Im Rahmen der gesamten Offenbarung gelten Merkmale und Einzelheiten, die im Zusammenhang mit dem erfindungsgemäßen Verfahren beschrieben sind, selbstverständlich auch im Zusammenhang mit der erfindungsgemäßen Vorrichtung zum Kühlen und jeweils umgekehrt, so dass bezüglich der Offenbarung zu den einzelnen Aspekten der Erfindung stets wechselseitig Bezug genommen wird beziehungsweise werden kann. Die einzelnen Figuren zeigen:
- Fig. 1: eine Kalibriereinrichtung
- Fig. 2: ein Teil einer Ansicht durch einen Schnitt einer erfindungsgemäßen Kalibriereinrichtung
- Fig. 3: eine vergrößerte Ansicht der Abstreifeinrichtung in ungedehnter Position
- Fig. 4: eine vergrößerte Ansicht der Abstreifeinrichtung in gedehnter Position
- Fig. 5: eine Draufsicht auf die Abstreifeinrichtung
- Fig. 6: eine erfindungsgemäße Blasfolienanlage

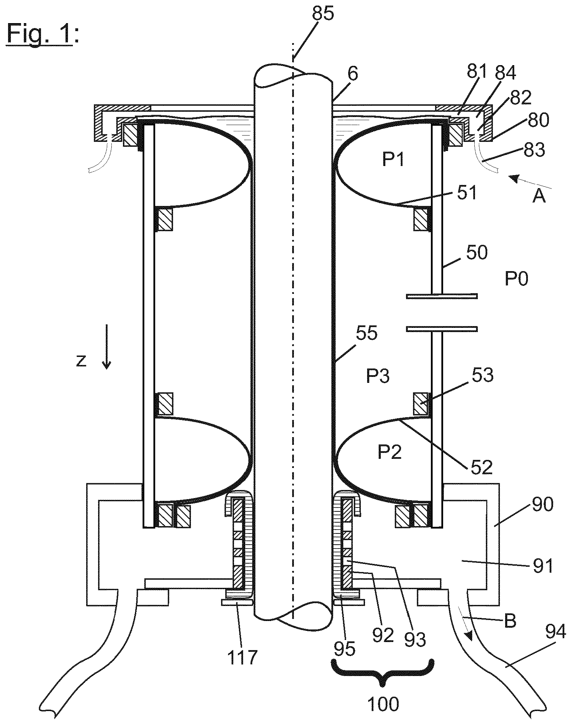

Die **Figur 1** zeigt eine Kalibriereinrichtung 1, wobei bei diesem Ausführungsbeispiel der Durchmesser des rohrförmigen Bereichs veränderbar ist.

Oberhalb der Hülse 50 ist ein Ring 80 vorgesehen, der an seiner Innenoberfläche eine umlaufende Öffnung 81 umfasst und der eine Ringkammer 84 umschließt. In radialer Richtung gesehen überragt der Ring 80 die Hülse. In diesem die Hülse 50 überragenden Teil ist eine umlaufende Vertiefung 82 eingebracht, die als Flüssigkeitsreservoir dienen kann. Die Flüssigkeit wird über Zuführschläuche 83, die vorteilhafterweise gleichmäßig über den Umfang des Rings verteilt sein können, zugeführt, was durch den Pfeil A angedeutet ist. Bei einem ausreichend hohen Flüssigkeitsstand innerhalb der Ringkammer tritt die Flüssigkeit aus der umlaufenden Öffnung 81 heraus und läuft in den Einlaufbereich zwischen dem elastisch verformbaren, rohrförmigen Bereich 55 und dem Folienschlauch 6 hinein. Hier wird ein Flüssigkeitsring ausgebildet. Der Folienschlauch nimmt einen Teil der Flüssigkeit mit, wobei letztere den Folienschlauch kühlt. Der Folienschlauch 6 wird in Transportrichtung z transportiert. Der Folienschlauch 6 ist gekennzeichnet durch seine Symmetrieachse 85, die gleichzeitig seine Hauptträgheitsachse oder kurz seine Hauptachse ist.

Um die Flüssigkeit nach ihrer Kühlwirkung wieder von dem Folienschlauch entfernen zu können, ist unterhalb des rohrförmigen Bereichs eine Absaugeinrichtung 89 angeordnet. Diese umfasst einen Ring 90, der ebenfalls eine ringförmige Kammer 91 bildet. Die innere Wand 92 ist mit Öffnungen 93 versehen, durch die das Wasser von der Oberfläche des Folienschlauchs abgesaugt werden kann. Zum Absaugen ist die ringförmige Kammer 91 über einen oder mehrere Schläuche 94 an eine Unterdruckquelle angeschlossen. Die Saugrichtung ist mit dem Pfeil B angedeutet. Damit der Folienschlauch 6 nun nicht an den Öffnungen 93 beschädigt wird, sind diese mit einem porösen Material 95 abgedeckt, durch welche zwar die Flüssigkeit gelangen kann, welches aber eine Verformung des Materials der Folienblase vermeidet. Als poröses Material kann etwa ein Gewebe, beispielsweise ein textiles Gewebe dienen. Viele andere Materialien, die für die genannte Anwendung geeignete Eigenschaften aufweisen, sind denkbar. Die innere Wand 92, die Öffnungen 93 und das Material 95 bilden zusammen ein flüssigkeitsdurchlässiges Element 100.

Die Flüssigkeit auch alternativ zur Absaugeinrichtung oder auch zusätzlich zu dieser mit einem als Abstreifeinrichtung 117 bezeichnetem Ableitelement von der Außenoberfläche des Folienschlauches abgenommen werden. Diese ist in dem Ausführungsbeispiel der Figur 1 in Transportrichtung z gesehen hinter der Absaugeinrichtung bzw. hinter dem rohrförmigen Bereich 55 angeordnet.

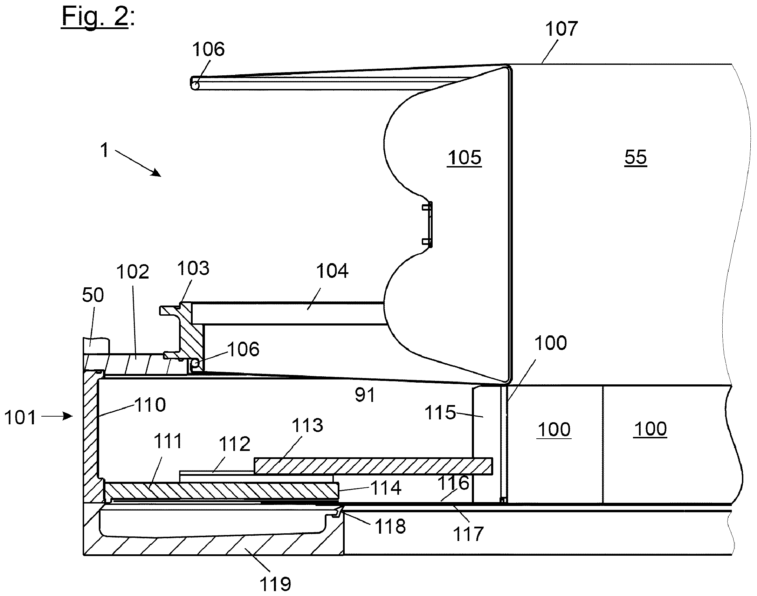

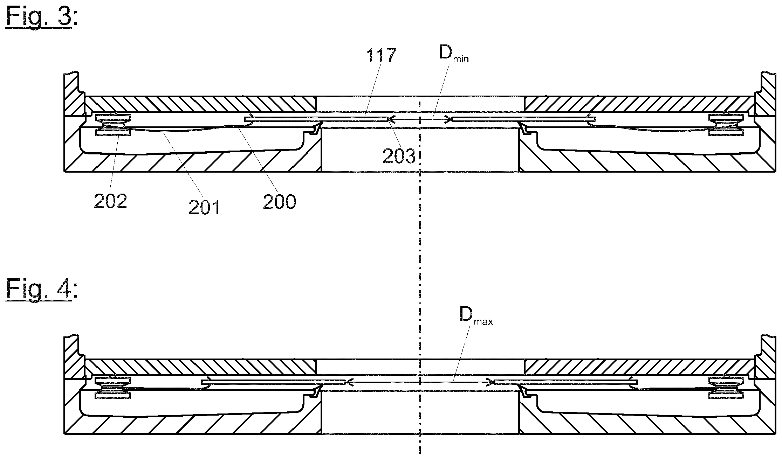

Die Vorrichtung und das Verfahren zur Veränderung des Innendurchmessers des rohrförmigen Bereichs sind in den Figuren 11 und 12 sowie den zugehörigen Beschreibungsteilen der Veröffentlichung WO 2012/032128 A1 offenbart. Diese Fundstellen gelten hiermit als in dieser Patentanmeldung einbezogen. Allerdings ist dieses nur ein Ausführungsbeispiel einer Kalibriervorrichtung mit einem durchmesserveränderbaren rohrförmigen Bereich. Auch andere Ausführungsbeispiele solcher Kalibriervorrichtung sind vorteilhaft mit Absaugeinrichtungen, wie sie insbesondere anhand der Figuren 2 und 3 und der folgenden Beschreibungsteilen erläutert wird, kombinierbar.

In der **Figur 2** ist nun ein Teil einer Ansicht durch einen Schnitt einer erfindungsgemäßen Kalibriereinrichtung 1 mit einer Absaugeinrichtung 101 dargestellt. Der Folienschlauch 6 ist der Übersichtlichkeit halber in dieser Ansicht nicht dargestellt. Die Hülse 50 trägt an ihrer Unterseite einen Stützring 102, auf dem sich über einen Zwischenring 103 und einer Halteeinrichtung 104 ein ringförmiger Körper 105 abstützt, mit welchem der Durchmesser des rohrförmigen Bereichs 55 einstellbar ist, was hier nicht näher erläutert werden soll. Der rohrförmige Bereich ist vorzugsweise gebildet durch einen Zylinder 107 aus einem flexiblen Material, der vom Innbereich her über den ringförmigen Körper nach außen gezogen ist und mittels Befestigungsringen 106 an einem geeigneten Bauteil, hier der Zwischenring 103 befestigt ist.

Unterhalb der Hülse 50 ist ein Hülsenansatz 110 vorgesehen, der eine nach innen reichende Tragplatte 111 trägt. Auf der Tragplatte 111 ist eine Schiene 112 angeordnet, auf welchem der Schlitten 113 insbesondere in radialer Richtung r des Folienschlauches bewegbar ist. Die Innenwandung 114 hat einen derart großen Abstand zur Hauptachse des Folienschlauches, dass die bei der Einstellung der Kalibriereinrichtung auf den größtmöglichen mit der Kalibriereinrichtung führbaren Folienschlauch die Tragplatte keine Limitierung darstellt. Der Schlitten 113 trägt an seinem der Hauptachse des Folienschlauches zugewandten Ende ein Stützelement 115, an dessen inneren Fläche das flüssigkeitsdurchlässige Element 100 angeordnet ist. Es sind in dem gezeigten Ausführungsbeispiel mehrere flüssigkeitsdurchlässige Elemente 100 vorgesehen, von denen zwei dargestellt sind.

Damit eine ringförmige Kammer ausgebildet werden kann, ist unterhalb eines jeden Stützelements 115 wenigstens eine Blechplatte 116 vorgesehen, welche mit dem Stützelement 115 verschiebbar ist. Bevorzugt ist diese Blechplatte an dem Stützelement befestigt. Unterhalb der Blechplatte 116 ist die Abstreifeinrichtung 117, insbesondere ein Gummiring, angeordnet, dessen Innenkante dazu eingerichtet ist, Flüssigkeit, welche nicht mittels der Absaugeinrichtung von der Außenoberfläche des Folienschlauchs abgesaugt werden konnte, abzustreifen. Damit auch die Innenkante des Gummirings hinsichtlich des Abstands zur Hauptachse des Folienschlauches einstellbar ist, kann dieser in radialer Richtung gedehnt werden, was bevorzugt simultan zur Verstellung des Abstands der flüssigkeitsdurchlässigen Elemente erfolgt. Unterhalb der Abstreifeinrichtung 117 ist eine umlaufende Dichtung 118 angeordnet, die mit einerseits dichtend an dem flexiblen Ring anliegt, andererseits in eine Nut des unteren Abschlussrings 119 eingelassen ist. Der untere Abschlussring 119 ist an dem Hülsenansatz 110 befestigt.

Insgesamt wird mit der beschriebenen Absaugeinrichtung eine ringförmige Kammer 91 gebildet, die zwecks Absaugung der Flüssigkeit mit einem Unterdruck beaufschlagbar ist. Dadurch wird die Abstreifeinrichtung 117 gegen die zumindest eine Blechplatte gezogen, wobei die Abstreifeinrichtung 117 insbesondere auch an der Unterkante der flüssigkeitsdurchlässigen Elemente anliegt. Oberhalb der flüssigkeitsdurchlässigen Elemente 100 wird die Kammer 91 durch den Zylinder 107, den Zwischenring 103 und dem Stützring 102 gebildet. Um eine erhöhte Dichtwirkung zu erreichen, kann sich der ringförmige Körper 105 durch seine Gewichtskraft zumindest zum Teil auf dem Stützelement 115 abstützen.

In der **Figur 3** ist eine vergrößerte Seitenansicht der Abstreifeinrichtung 117, welcher sich in seiner ungedehnten Position befindet. Die Abstreifeinrichtung weist eine Innenkante 203 auf, welche den Teil der Abstreifeinrichtung darstellt, welcher den geringsten Abstand zur Hauptachse des Folienschlauchs einnimmt. Im Bereich des äußeren Randes des flexiblen Rings sind mehrer Zughaken 200 angeordnet, welche jeweils in ein Loch in dem fexiblen Ring einfassen. An jedem Zughaken ist ein Zugdraht 201 befestigt, welcher auf einer Rolle 202 aufrollbar ist. Die Rolle überträgt vorteilhafterweise die notwendige Zugkraft auf den Zugdraht 201. In der ungedehnten Position gibt die Abstreifeinrichtung 117 eine Öffnung für den Folienschlauch mit dem minimalen Durchmesser Dₘᵢₙ frei. Dieser Sachverhalt wird verdeutlich durch den durchhängenden Zugdraht 201, d. h., dieser übt keine radial nach außen gerichtete Zugkraft auf die Abstreifeinrichtung aus.

In der **Figur 4** ist nun die Situation dargestellt, in der der Zugdraht 201 eine radial nach außen gerichtete Zugkraft auf die Abstreifeinrichtung ausübt. Dazu ist ein Teil des Zugdrahts 201 auf die Rolle 202 aufgewickelt. Das Aufwickeln auf eine Rolle ist dabei vorteilhaft, da die Zugstrecke des Zugdraht größer sein kann als der dadurch hervorgerufene Zuwachs des Radius der Öffnung für den Folienschlauch. Somit ist eine kompakte Vorrichtung geschaffen zum Verändern des Abstandes zwischen der Abstreifeinrichtung und der Hauptachse des Folienschlauchs.

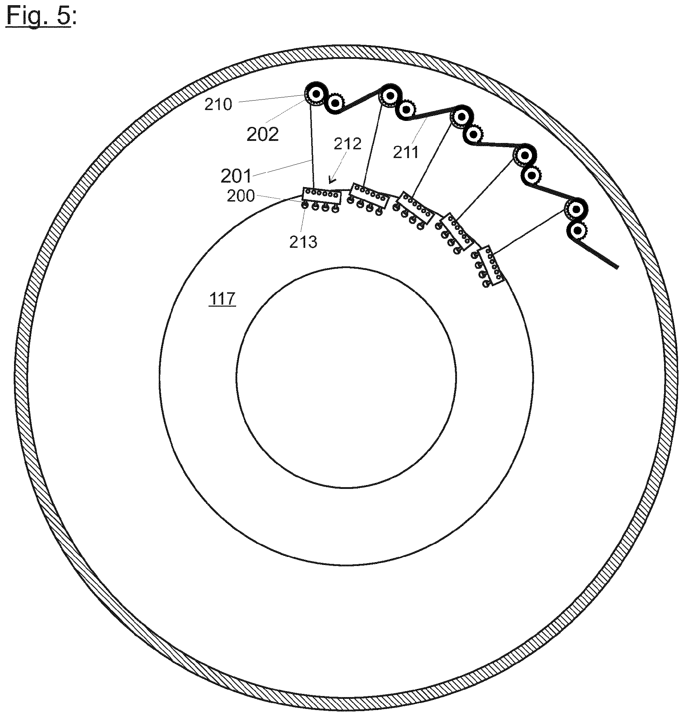

Die **Figur 5** zeigt nun eine Draufsicht auf die Abstreifeinrichtung, wobei nun die wesentlichen Bestandteile eines Antriebskraftübertragungsmechanis zum Übertragen einer Antriebskraft auf die Rollen 202 sichtbar sind. Die Rollen sind drehfest mit Zahnrädern 210 verbunden, welche von einer Kette 211 antreibbar sind. Anstelle der Kette sind auch andere flexible, aber im Wesentlichen nicht dehnbare Antriebskraftübertragungsmittel wie Zahnriemen, Riemen, Drähte oder Bänder denkbar. Die Kette ist von einem nicht dargestellten Antriebsmotor, vorzugsweise ein Elektromotor, antreibbar. Im gezeigten Ausführungsbeispiel ist der Zugdraht 201 nicht direkt mit einem Haken verbunden, sondern über eine Zugeinrichtung 212, an der mehrere Haken 200 angeordnet sind. Jeder Haken greift in eine Öffnung 213 der Abstreifeinrichtung 117. Durch diese Anordnung kann die von einem einzigen Zugdraht 201 zur Verfügung gestellte, im Wesentlichen radiale Zugkraft gleichmäßig auf einen Bogenabschnitt der Abstreifeinrichtung verteilt werden. Die Gefahr, dass eine Öffnung 213 ausreißt, ist damit stark verringert.

Die Öffnungen 213 nehmen dabei nicht einen konstanten Abstand zur Hauptachse des Folienschlauchs ein, sondern sind in einem Winkel zur Außenkante der Abstreifeinrichtung angeordnet. Es ist nun möglich die beiden benachbarten Öffnungen zweier benachbarter Zugeinrichten 212 auf einem geringen Abstand in Umfangsrichtung der Abstreifeinrichtung zu halten. Dadurch wird erreicht, dass sich dieser Abstand auch bei großer Zugkraft nicht oder nicht nachteilhaft ändert. Die Zugeinrichtungen 212, die Rollen und die Zahnräder sind gleichmäßig über den Umfang der Abstreifeinrichtung verteilt, so dass an allen Öffnungen 213 eine im Wesentlichen gleiche, in radialer Richtung gerichtete Zugkraft angreift. Insgesamt wird durch diese Anordnung erreicht, dass die punktuelle Zugkraft an den Öffnungen zu einem gleichmäßigen, an jeder Stelle der Innenkante 203 im Wesentlichen konstanten Durchmesser D führt.

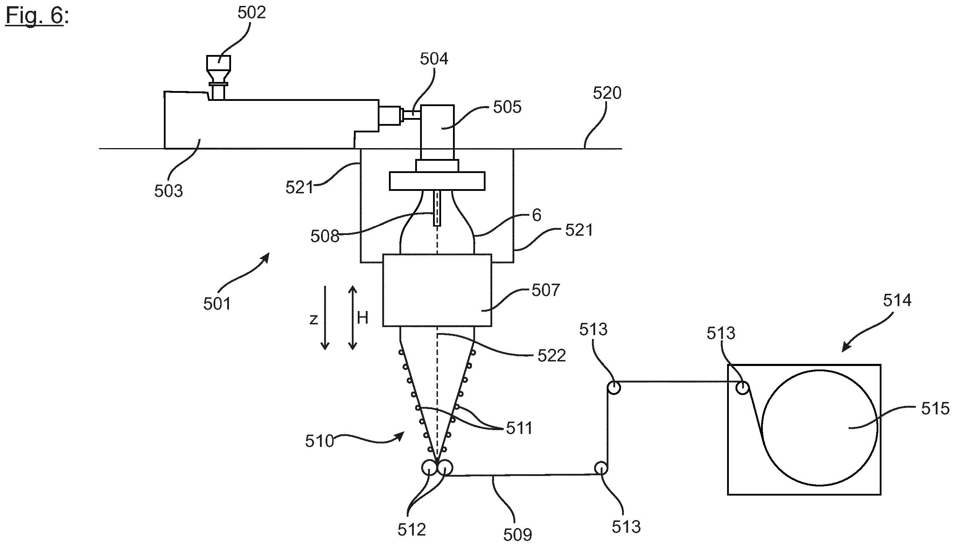

Die **Figur 6** stellt schließlich eine erfindungsgemäße Blasfolienanlage 501 dar. Dem Einfüllstutzen 502 wird ein Kunststoff zugeführt, welcher dann in dem Extruder 503 plastifiziert wird. Die entstandene Masse wird über eine Verbindungsleitung 504 dem Blaskopf 505 zugeführt, mit welchem aus der Masse ein Folienschlauch 6 gebildet wird. Dem Blaskopf 505 können weitere Extruder zugeordnet sein, so dass mehrschichtige Folien herstellbar sind. Die Extruder können dabei auf einer erhöhten Plattform 520 angeordnet sein, an welcher auch der Blaskopf 505 aufgehängt ist. Auch eine Trageinrichtung 521 kann an dieser Plattform angeordnet sein. Diese Trageinrichtung trägt den weiter unten näher beschriebenen Kalibrierkorb 507, wobei die Trageinrichtung eine Höhenverstellung umfasst, mit welcher der Abstand des Kalibrierkorbes 507 zum Blaskopf einstellbar ist. Dieser Sachverhalt wird durch den Doppelpfeil H verdeutlicht.

Der Folienschlauch 6 verlässt den Blaskopf durch eine in dieser Darstellung nicht sichtbaren Ringdüse in Transportrichtung z. Die unterbrochene Linie 522 stellt dabei die Symmetrieachse des Folienschlauchs 6 dar.

Der Folienschlauch 6 liegt beim Verlassen des Blaskopfes 5 zunächst als Folienblase vor, in der gegenüber dem Umgebungsdruck ein leicht erhöhter Innendruck vorliegt. Dies wird durch die Zuführung von Druckluft durch den Gebläsestutzen 508 erreicht. Aufgrund des erhöhten Innendrucks weitet sich das noch nicht verfestigte Material des Folienschlauches 6 auf. Letztlich wird auf diese Weise der Durchmesser des fertigen Folienschlauches 6 als auch die Dicke des Folienmaterials eingestellt.

Anschließend gelangt die noch nicht verfestigte Folienblase 6 in die als Kalibrierkorb 507 bezeichnete Kalibrier- und/oder Kühleinrichtung. Hier wird der Durchmesser des Folienschlauches begrenzt. Innerhalb des Kalibrierkorbes 507 kühlt der Folienschlauch auf eine Temperatur ab, bei der eine nachträgliche Verformung nicht mehr oder nur noch unter Einsatz großer Kräfte möglich ist. Die Position, an der dieser Phasenübergang stattfindet, wird oft als "Frostlinie" bezeichnet.

| **Bezugszeichenliste** | |
|---|---|
| 1 | Kalibriereinrichtung |
| 6 | Folienschlauch |
| | |
| 50 | Hülse |
| 55 | Elastisch verformbarer rohrförmiger Bereich |
| | |
| 80 | Ring |
| 81 | Öffnung |
| 83 | Zuführschläuche |
| 84 | Ringkammer |
| 85 | Symmetrieachse |
| 89 | Absaugeinrichtung |
| | |
| 90 | Ring |
| 91 | Ringförmige Kammer |
| 92 | Innere Wand |
| 93 | Öffnung |
| 94 | Schlauch |
| 95 | Poröses Material |
| | |
| 100 | Flüssigkeitsdurchlässiges Element |
| 101 | Absaugeinrichtung |
| 102 | Stützring |
| 103 | Zwischenring |
| 104 | Halteeinrichtung |
| 105 | Ringförmiger Körper |
| 106 | Befestigungsring |
| 107 | Zylinder |
| | |
| 110 | Hülsenansatz |
| 111 | Trag platte |
| 112 | Schiene |
| 113 | Schlitten |
| 114 | Innenwandung |
| 115 | Stützelement |
| 116 | Blechplatte |
| 117 | Abstreifeinrichtung |
| 118 | Umlaufende Dichtung |
| 119 | Unterer Abschlussring |
| | |
| 200 | Zughaken |
| 201 | Zugdraht |
| 202 | Rolle |
| 203 | Innenkante |
| | |
| 210 | Zahnrad |
| 211 | Kette |
| 212 | Zugeinrichtung |
| 213 | Öffnung |
| | |
| | |
| | |
| | |
| | |

## Patentansprüche

1. Vorrichtung zum Kühlen eines Folienschlauches (6),
mit einer Vorrichtung zum Aufbringen von Flüssigkeit auf die Außenwandung des Folienschlauches,
wobei mit der Flüssigkeit die Folie kühlbar ist,
wobei die Flüssigkeit zwischen einem rohrförmigen Bereich (55) und dem Folienschlauch (6) einleitbar ist,
wobei der Folienschlauch in eine Transportrichtung (z) transportierbar ist,
mit zumindest einem Ableitelement zum Ableiten zumindest eines Teils der Flüssigkeit von dem Folienschlauch (6),
wobei das Ableitelement zumindest Teile des Folienschlauches (6) in Umfangsrichtung umgibt, wobei das Ableitelement (100) in Transportrichtung (z) gesehen hinter dem rohrförmigen Bereich (55) angeordnet ist und
das Ableitelement (100) eine umlaufende, ununterbrochene Kante umfasst, welche der Außenoberfläche des Folienschlauches (6) zugewandt ist,
**dadurch gekennzeichnet, dass** der Abstand, den das Ableitelement (100) zur Hauptachse (522) des Folienschlauchs (6) einnimmt, veränderbar ist.

2. Vorrichtung nach Anspruch 1
**dadurch gekennzeichnet, dass**
die Vorrichtung zum Aufbringen von Flüssigkeit wenigstens ein Folienführungselement mit wenigstens einer Innenwandung (92) umfasst, welches zumindest teilweise um den Folienschlauch herum angeordnet ist und entlang welchem der Folienschlauch (6) führbar ist.

3. Vorrichtung nach einem der vorstehenden Ansprüche
**dadurch gekennzeichnet, dass**
oberhalb oder im oberen Bereich des Folienführungselements ein Flüssigkeitsreservoir vorgesehen ist, mit welchem die Flüssigkeit bereitstellbar ist, wobei insbesondere die Flüssigkeit zwischen das Folienführungselement und den Folienschlauch (6) leitbar ist.

4. Vorrichtung nach einem der vorstehenden Ansprüche
**dadurch gekennzeichnet, dass**
das zumindest eine Ableitelement unterhalb des zumindest einen Folienführungselements angeordnet ist.

5. Vorrichtung nach einem der vorstehenden Ansprüche
**dadurch gekennzeichnet, dass**
in Transportrichtung des Folienschlauches gesehen zwischen dem zumindest einen Folienführungselement und dem Ableitelement eine Absaugeinrichtung angeordnet ist, mit welcher die Flüssigkeit zumindest teilweise von der Außenwandung des Folienschlauches entfernbar ist.

6. Vorrichtung nach einem der vorstehenden Ansprüche
**dadurch gekennzeichnet, dass**
das Ableitelement einen ringförmigen, flachen Streifen aus einem elastischen Material umfasst.

7. Vorrichtung nach einem der vorstehenden Ansprüche,
**dadurch gekennzeichnet, dass**
das Ableitelement einen ringförmigen, flachen Streifen aus einem Gummimaterial umfasst.

8. Vorrichtung nach einem der vorstehenden Ansprüche,
**dadurch gekennzeichnet, dass**
an mehreren Punkten, insbesondere an mehr als 20 Punkten, des Ableitelements wenigstens eine Krafteinleiteinrichtung angreift, mit welcher eine Stellkraft in das Ableitelement einleitbar ist.

9. Vorrichtung nach einem der vorstehenden Ansprüche,
**dadurch gekennzeichnet, dass**
die Krafteinleiteinrichtung eine Mehrzahl von radial nach außen bewegbaren und zugbelastbaren Stellelementen umfasst, insbesondere Drähte oder Bänder.

10. Vorrichtung nach dem vorstehenden Anspruch
**dadurch gekennzeichnet, dass**
die Stellelemente flexibel und in ihrer Länge im Wesentlichen konstant sind.

11. Vorrichtung nach einem der vorstehenden Ansprüche
**dadurch gekennzeichnet, dass**
sie einen Antrieb umfasst, welcher eine Stellkraft zur Abstandsveränderung bereitstellbar ist.

12. Vorrichtung nach einem der vorstehenden Ansprüche
**dadurch gekennzeichnet, dass**
ein Antriebskraftübertragungsmechanismus vorgesehen ist, mit welchem eine Antriebskraft in eine Stellkraft zur Einstellung des Ableitelements umwandelbar ist.

13. Vorrichtung nach dem vorstehenden Anspruch
**dadurch gekennzeichnet, dass**
der Antriebskraftübertragungsmechanismus die Antriebskraft direkt oder über Wickelrollen auf die Stellelemente überträgt.

14. Vorrichtung nach einem der beiden vorstehenden Ansprüche
**dadurch gekennzeichnet, dass**
der Antriebskraftübertragungsmechanismus wenigstens ein endlos umlaufendes Kraftübertragungselement, insbesondere eine Kette (211) oder einen Ring (80, 90), umfasst.

15. Verfahren zum Kühlen eines Folienschlauches (6),
bei dem mit einer Vorrichtung zum Aufbringen von Flüssigkeit eine Flüssigkeit auf die Außenwandung des Folienschlauches aufbebracht wird,
wobei mit der Flüssigkeit die Folie gekühlt wird,
wobei die Flüssigkeit zwischen einem rohrförmigen Bereich (55) und dem Folienschlauch (6) eingeleitet wird,
wobei der Folienschlauch in eine Transportrichtung (z) transportiert wird,
mit zumindest einem Ableitelement zum Ableiten zumindest eines Teils der Flüssigkeit von dem Folienschlauch (6) abgeleitet wird,
wobei das Ableitelement zumindest Teile des Folienschlauches (6) in Umfangsrichtung umgibt,
wobei das Ableitelement in Transportrichtung (z) gesehen hinter dem rohrförmigen Bereich angeordnet ist und
das Ableitelement (100) eine umlaufende, ununterbrochene Kante umfasst, welche der Außenoberfläche des Folienschlauches (6) zugewandt ist,
**dadurch gekennzeichnet, dass** bei einer Durchmesseränderung des Folienschlauchs der Abstand, den das Ableitelement (100) zur Hauptachse des Folienschlauchs (6) einnimmt, verändert wird.

## Claims

1. A device for cooling a blown film (6), having a device for applying liquid to the outer wall of the blown film,
wherein the film can be cooled with the liquid,
wherein the liquid can be introduced between a tubular region (55) and the blown film (6),
wherein the blown film can be transported in a transport direction (z),
having at least one discharge element for discharging at least one part of the liquid from the blown film (6),
wherein the discharge element surrounds at least parts of the blown film (6) in the circumferential direction,
wherein the discharge element (100), when viewed in the transport direction (z), is arranged behind the tubular region (55) and
the discharge element (100) comprises a circumferential, uninterrupted edge, which faces the outer surface of the blown film (6),
**characterized in that** the distance, which the discharge (100) assumes to the main axis (522) of the blown film (6), can be changed.

2. The device according to claim 1,
**characterized in that**
the device for applying liquid comprises at least one film guide element with at least one inner wall (92), which is arranged at least partially around the blown film and along which the blown film (6) can be guided.

3. The device according to any one of the preceding claims,
**characterized in that**
above or in the upper region of the film guide element a liquid reservoir is provided, with which the liquid can be provided, wherein in particular the liquid can be guided between the film guide element and the blown film (6).

4. The device according to any one of the preceding claims,
**characterized in that**
the at least one discharge element is arranged underneath the at least one film guide element.

5. The device according to any one of the preceding claims,
**characterized in that**
when viewed in the transport direction of the blown film, a suction device is arranged between the at least one film guide element and the discharge element, with which suction device the liquid can be removed at least partially from the outer wall of the blown film.

6. The device according to any one of the preceding claims,
**characterized in that**
the discharge element comprises an annular, flat strip made of an elastic material.

7. The device according to any one of the preceding claims,
**characterized in that**
the discharge element comprises an annular, flat strip made of a rubber material.

8. The device according to any one of the preceding claims,
**characterized in that**
at least one force introduction device, with which an actuating force can be introduced into the discharge element, engages with several points, in particular, with more than 20 points of the discharge element.

9. The device according to any one of the preceding claims,
**characterized in that**
the force introduction device comprises a plurality of actuating elements, in particular wires or strips, which can be moved radially outward and can be subjected to tensile loading.

10. The device according to the preceding claim,
**characterized in that**
the actuating elements are flexible and are substantially constant in their length.

11. The device according to any one of the preceding claims,
**characterized in that**
it comprises a drive, which can provide an actuating force for changing the distance.

12. The device according to any one of the preceding claims,
**characterized in that**
a drive force transmission mechanism is provided, with which a drive force can be converted into an actuating force for adjusting the discharge element.

13. The device according to the preceding claim,
**characterized in that**
the drive force transmission mechanism transmits the drive force directly or via winding rollers to the actuating element.

14. The device according to any one of the two preceding claims,
**characterized in that**
the drive force transmission mechanism comprises at least one endlessly circulating force transmission element, in particular, a chain (211) or a ring (80, 90).

15. A method for cooling a blown film (6),
in which a liquid is applied to the outer wall of the blown film with a device for applying liquid,
wherein the film is cooled with the liquid,
wherein the liquid is introduced between a tubular region (55) and the blown film (6),
wherein the blown film can be transported in a transport direction (z),
with at least one discharge element for discharging, at least one part of the liquid is discharged from the blown film (6),
wherein the discharge element surrounds at least parts of the blown film (6) in the circumferential direction,
wherein the discharge element, when viewed in the transport direction (z), is arranged behind the tubular region and
the discharge element (100) comprises a circumferential, uninterrupted edge, which faces the outer surface of the blown film (6),
**characterized in that** when the diameter of the blown film changes, the distance, which the discharge element (100) assumes to the main axis of the blown film (6), is changed.

## Revendications

1. Dispositif de refroidissement d'un film tubulaire (6),
avec un dispositif d'application d'un liquide sur la paroi externe du film tubulaire,
dans lequel, avec le liquide, le film peut être refroidi,
dans lequel le liquide peut être introduit entre une zone tubulaire (55) et le film tubulaire (6),
dans lequel le film tubulaire peut être transporté dans une direction de transport (z),
avec au moins un élément de déviation pour la déviation d'au moins une partie du liquide du film tubulaire (6),
dans lequel l'élément de déviation entoure au moins des parties du film tubulaire (6) dans la direction circonférentielle,
dans lequel l'élément de déviation (100) est disposé, vu dans la direction de transport (z), derrière la zone tubulaire (55) et
l'élément de déviation (100) comprend une arête circulaire ininterrompue qui est orientée vers la surface externe du film tubulaire (6),
**caractérisé en ce que** la distance que l'élément de déviation (100) adopte par rapport à l'axe principal (522) du film tubulaire (6) est variable.

2. Dispositif selon la revendication 1,
**caractérisé en ce que** le dispositif d'application de liquide comprend au moins un élément de guidage de film avec au moins une paroi interne (92), qui est disposé au moins partiellement autour du film tubulaire, et le long duquel le film tubulaire (6) peut être guidé.

3. Dispositif selon l'une des revendications précédentes,
**caractérisé en ce que**
au-dessus ou dans la partie supérieure de l'élément de guidage de film, est prévu un réservoir de liquide avec lequel le liquide peut être mis à disposition, dans lequel, plus particulièrement, le liquide peut être conduit entre l'élément de guidage de film et le film tubulaire (6).

4. Dispositif selon l'une des revendications précédentes,
**caractérisé en ce que**
l'au moins un élément de déviation est disposé en dessous de l'au moins un élément de guidage de film.

5. Dispositif selon l'une des revendications précédentes,
**caractérisé en ce que**
vue dans la direction de transport du film tubulaire, entre l'au moins un élément de guidage et l'élément de déviation, est disposé un dispositif d'aspiration avec lequel le liquide peut être éliminé au moins partiellement de la paroi externe du film tubulaire.

6. Dispositif selon l'une des revendications précédentes,
**caractérisé en ce que**
l'élément de déviation comprend une bande annulaire plate en matériau élastique.

7. Dispositif selon l'une des revendications précédentes,
**caractérisé en ce que**
l'élément de déviation comprend une bande annulaire plate en matériau de type caoutchouc.

8. Dispositif selon l'une des revendications précédentes,
**caractérisé en ce que**
au niveau de plusieurs points, plus particulièrement au niveau de plus de 20 points, d'élément de déviation, agit au moins un dispositif de transmission de force avec lequel une force de réglage peut être transmise à l'élément de déviation.

9. Dispositif selon l'une des revendications précédentes,
**caractérisé en ce que**
le dispositif de transmission de force comprend une pluralité d'éléments de réglage mobiles radialement vers l'extérieur et pouvant être sollicités en traction, plus particulièrement des fils ou des bandes.

10. Dispositif selon la revendication précédente,
**caractérisé en ce que**
les éléments de réglage sont flexibles et leur longueur est globalement constante.

11. Dispositif selon l'une des revendications précédentes,
**caractérisé en ce que**
il comprend un entraînement auquel peut être mise à disposition une force de réglage pour la modification de la distance.

12. Dispositif selon l'une des revendications précédentes,
**caractérisé en ce que**
un mécanisme de transmission de force d'entraînement est prévu, avec lequel une force d'entraînement peut être convertie en une force de réglage pour le réglage de l'élément de déviation.

13. Dispositif selon la revendication précédente,
**caractérisé en ce que**
le mécanisme de transmission de force d'entraînement transmet la force d'entraînement directement ou par l'intermédiaire de rouleaux d'enroulement aux éléments de réglage.

14. Dispositif selon l'une des deux revendications précédentes,
**caractérisé en ce que**
le mécanisme de transmission de force d'entraînement comprend au moins un élément de transmission de force circulaire sans fin, plus particulièrement une chaîne (211) ou une bague (80, 90).

15. Procédé de refroidissement d'un film tubulaire (6),
dans lequel, avec un dispositif pour l'application de liquide, un liquide est appliqué sur la paroi externe du film tubulaire,
dans lequel, avec le liquide, le film peut être refroidi,
dans lequel le liquide peut être introduit entre une zone tubulaire (55) et le film tubulaire (6),
dans lequel le film tubulaire peut être transporté dans une direction de transport (z),
avec au moins un élément de déviation pour la déviation d'au moins une partie du liquide du film tubulaire (6),
dans lequel l'élément de déviation entoure au moins des parties du film tubulaire (6) dans la direction circonférentielle,
dans lequel l'élément de déviation est disposé, vu dans la direction de transport (z), derrière la zone tubulaire et
l'élément de déviation (100) comprend une arête circulaire ininterrompue qui est orientée vers la surface externe du film tubulaire (6),
**caractérisé en ce que**, lors d'une variation du diamètre du film tubulaire, la distance que l'élément de déviation (100) adopte par rapport à l'axe principal du film tubulaire (6) est variable.
